**Europäisches Patentamt**

**European Patent Office**

**Office européen des brevets**

(19)

(11) Publication number : **0 398 448 B1**

(12) **EUROPEAN PATENT SPECIFICATION**

(45) Date of publication of patent specification :
29.09.93 Bulletin 93/39

(51) Int. Cl.⁵ : **C10M 143/08, C08F 210/14, // C10N30:02, C10N70:00**

(21) Application number : **90201258.2**

(22) Date of filing : **17.05.90**

(54) **Viscosity modification of mineral oils.**

The file contains technical information
submitted after the application was filed and
not included in this specification

(30) Priority : **19.05.89 GB 8911611**

(43) Date of publication of application :
**22.11.90 Bulletin 90/47**

(45) Publication of the grant of the patent :
**29.09.93 Bulletin 93/39**

(84) Designated Contracting States :
**BE DE ES FR GB IT NL**

(56) References cited :
**FR-A- 2 039 345**
**FR-A- 2 336 419**
**GB-A- 1 559 194**
**US-A- 4 548 915**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Sjardijn, Willem
Badhuisweg 3
NL-1031 CM Amsterdam (NL)**
Inventor : **Van der Linden-Lemmers,
Wilhelmina Johanna Maria
Badhuisweg 3
NL-1031 CM Amsterdam (NL)**
Inventor : **Reynhout, Marinus Johannes
Badhuisweg 3
NL-1031 CM Amsterdam (NL)**
Inventor : **Schadenberg, Hendrik
Badhuisweg 3
NL-1031 CM Amsterdam (NL)**

EP 0 398 448 B1

## Description

The present invention is concerned with mineral oil compositions comprising certain additives. It is known that in many aspects related to various applications and handling methods the viscosity of mineral oil compositions such as crude oils, lubricating oils, naphthas and gas-oils, beneficial effects can be obtained by adding a viscosity-modifying chemical compound or composition thereto. In transport through pipelines reduced drag may be obtained with such additives, other additives are primarily intended to depress the pourpoint of lubricating oils, domestic fuel-oils or hydrocarbon oil base-stocks.

One of the additives that has been well received by the market of today is the polymeric chemical SHELL-SWIM 5 (Commercial brochures issued by Shell International Chemical Company Ltd. SHELL-SWIM 5 is a Trade Mark). This is a $C_{16}$ to $C_{22}$ alkyl ester of polyacrylic acid with a weight average molecular weight of 3 to $6.10^5$ and a Q-value of about 6. This additive finds useful application, mainly in drag-reducing, pourpoint depressing and as low temperature viscosity modifier, the latter particularly in heavy-duty lubricating oils for automotive engines. However, the advantages obtainable with that additive are tied to a certain optimum value, above that level no further improvement is obtainable just by adding more additive, as is shown by the comparative experimental data included in this specification.

FR-A 2039345 is concerned with copolymers of $C_{14}$ to $C_{24}$ alpha monoolefins obtainable by polymerization with i.a. Ziegler Natta catalysts and with the use of such copolymers as dewaxing aids in mineral oil compositions. FR-A 2336419 relates to i.a. pour point depressants obtainable by copolymerization of $C_4$ to $C_{50}$ alphamonoolefins with Ziegler catalysts.

The present invention seeks to solve the problem of obtaining improvement levels better than the optimum level set out hereinbefore. In addition, the invention seeks to solve the problem of finding an attractive process for preparing such improved additives.

Therefore, the present invention provides improved mineral oil compositions comprising an additive which has been prepared by copolymerising a mixture of at least two alpha-olefins with at least 16 carbon atoms each in the presence of a catalyst comprising a) a tetravalent titanium compound on a magnesium dihalide support and an alkyl ester of an aromatic carboxylic acid and b) a trialkyl aluminium compound.

The copolymerization process for lower alpha-olefins, such as propylene or butene-1, and the supported catalyst employed in this invention are known per se, see for example GB 1310547, GB 1387890, GB 1559194, EP 19330, EP 135973 and US 4548915. Catalyst component b) may be employed as such, which is preferred, or in the form of a complex with a solubles control agent, usually an alkyl ester of an aromatic carboxylic ester, the latter sometimes also being referred to as "outer electron donor". In catalyst component a) $C_1$ to $C_4$ alkyl esters of benzoic acid are the electron donors of choice and the preferred titanium compound is titanium tetrachloride.

In the catalyst systems employed in this invention component b) will generally be used in a molar ratio to titanium compound in component a) of at least 2:1, e.g. 10:1 or 30:1. Higher ratios may however also be applied. A preferred component b) is triethyl aluminium. Component b) may be employed per se or in the form of a complex with an electron donor.

Copolymerization may be conducted in gas-phase or liquid phase, the latter in the presence or absence of an organic diluent. Suitable polymerization temperatures are from 60 to 100 °C. The copolymerization may be continued to produce a weight average molecular weight of $10^5$ or higher. Preferred molecular weights are from $1.5 \times 10^5$ to $5.10^5$. Molecular weight control can be achieved with conventional chain transfer agents such as hydrogen. Diethyl-zinc is another effective molecular weight control agent.

It is an advantage of the present copolymerization process that the use of magnesium dihalide supported catalysts allows the obtaining of attractively high polymer yields and favourable molecular weight control leading to modest Q-values. In contrast thereto both control of polymer yield and molecular weight distribution would be less easy to achieve when employing conventional Ziegler-Natta catalysts based on titanium trichloride and diethylaluminium chloride instead of the aforesaid supported catalysts.

The mixture of alpha-olefins which is subjected to copolymerizations in order to produce the additives employed in this invention may be obtained by any ethylene oligomerization process known per se, e.g. the process disclosed in GB 1353873, GB 1411606 or GB 1550419.

Preferred mixtures of alpha-olefins are those comprising even numbered olefins only. From such mixtures the most attractive additives are obtained when the major alpha-olefin is one having 20, 22 or 24 carbon atoms. The olefin mixture may comprise olefins having a very high number of carbon atoms, for example 48 or 56 or more, but it is preferred to restrict the presence in the mixture of olefins having at least 30 carbon atoms to at most 7 %wt each, normally the maximum presence of olefins with 32 and more carbon atoms will then taper down to values approaching about 1 or 0.5 %wt each at 50 carbon atoms.

Another embodiment of this invention sets a preference for copolymerizing alpha-olefin mixtures wherein

2

the minimum carbon atoms of the individual olefins equals 18. In that event very small amounts of lower molecular weight alpha-olefins may be tolerated in the mixture provided the total weight percentage thereof does not exceed 0.9 %wt, based on the weight of the olefin mixture.

Three typical examples of alpha-olefin mixtures are set out in Table I. They can be prepared in according with the process disclosed in US-A-4548915, the data are given in %wt.

## TABLE I

| | | | | | |
|---|---|---|---|---|---|
| < C18 | 0.7 | | - | | - |
| C18 | 6.4 | < C20 | 1.9 | | - |
| C20 | 17.2 | | 10.7 | < C22 | 2.4 |
| C22 | 14.3 | | 29.3 | | 8.8 |
| C24 | 11.5 | | 17.2 | | 17.3 |
| C26 | 9.6 | | 11.3 | | 13.5 |
| C28 | 8.0 | | 8.0 | | 10.5 |
| C30 | 6.4 | | 6.3 | | 9.3 |
| C32 | 5.2 | | 4.4 | | 7.9 |
| C34 | 4.1 | | 3.7 | | 6.5 |
| C36 | 3.5 | | 2.5 | | 5.0 |
| C38 | 2.7 | | 1.8 | | 3.8 |
| C40 | 2.2 | | 1.1 | | 3.1 |
| C42 | 1.8 | | 0.6 | | 2.5 |
| C44 | 1.6 | | 0.3 | | 1.8 |
| > C44 | 4.8 | | 0.2 | | 1.6 |
| | - | > C46 | 0.8 | | 1.3 |
| | - | | - | > C48 | 4.7 |

In the mineral oil composition of the invention the polymeric additive will usually be contained in amounts of from 0.001 to 2 %wt, preferably of from 0.01 to 0.5 %wt, calculated on the weight of the composition. Drag reducing performance and pourpoint depressing actions are amongst the most striking advantages obtainable with this invention. Another useful application is the use as dewaxing aid for hydrocarbon base stocks.

Some of the copolymers produced with copolymerizing the alpha-olefin mixtures set out hereinbefore are novel compounds. Therefore, the invention also relates to novel copolymers of at least two alpha-olefins which each have an even number of carbon atoms, this number being at least 16.

The invention will now be illustrated by some working examples.

## EXAMPLE 1

A copolymer was prepared by copolymerizing the mixture of alpha-olefins included in Table I, hereinabove, left-hand column. The catalyst employed for copolymerization comprised triethyl aluminium as component b), the other component was prepared by halogenating magnesium diethoxide by reaction with titanium tetrachloride to form magnesium dichloride, at 80 °C in a liquid phase comprising the titanium tetrachloride reactant, monochlorobenzene and 0.3 molar (calculated on magnesium compound) of ethyl benzoate electron donor. The solid reaction product was then repeatedly contacted at 85 °C with a mixture of benzoylchloride, monochlorobenzene and titanium tetrachloride. In the end the solid reaction product was isolated and thoroughly washed with iso-octane.

Copolymerization was achieved at 80 °C in xylene liquid phase, during 3 hours. The Al:Ti molar ratio in the catalyst employed was 10:1, the aluminium catalyst was not pre-complexed with electron donor. Conversion of monomer into copolymer was 63.5%. The soluble copolymer was precipitated by addition of methanol. GPC analysis showed the copolymer to have a weight average molecular weight of about 329.000. Q-Value was 2.9.

A 26.7 %wt solution of copolymer in xylene was used for doping studies (Additive No. 1).

EXAMPLE 2

Using the same catalyst and the same alpha-olefin mixture as set out in Example 1, copolymerization was now carried out in bulk for a period long enough to produce 51 %wt conversion into copolymer. To the copolymer solution in remaining liquid monomer xylene was added to dilute the solution to a copolymer concentration of ± 21.4 %wt. The weight average molecular weight of the copolymer was 280,000, Q-value was 2.4 as shown by GPC analysis (Additive No. 2).

EXAMPLE 3

Using the same catalyst component a) and the same alpha-olefin mixture as set out in Example 1, copolymerization was effected using 0.035 mmol triethylaluminium as component b), 14 mg component a) and 0.0175 mmol diethylzinc as molecular weight control agent (Al:Ti ratio 10:1). After 3 hours at 80 °C, a conversion into copolymer of 64.7% was obtained. The copolymer was precipitated with methanol. Weight average molecular weight (GPC analysis) was 200,000.

A 31 %wt solution in xylene is employed for doping tests (Additive No. 3).

EXAMPLE 4

Example 3 was repeated under the very same conditions apart from using 0.0525 mmol diethylzinc, instead of 0.035 mmol, to produce a copolymer with a weight average molecular weight of 150,000.

A 30.1 %wt solution was made in xylene (Additive No. 4).

The additives were tested for pourpoint depressant in crude oils, marked A, resp. B which are different batches of Bombay High, and C which is Sarier. Doping was tested at temperatures of 50 and 90 °C in varying concentrations as marked in Table II.

For comparison doping with SHELL-SWIM 5 was likewise evaluated.

## TABLE II

| oil | T, 0 °C | Add | | conc, g.$10^{-6}$g | Pourpoint °C |
|-----|---------|-----|-----|--------------------|--------------|
| A | 90 | – | | – | 27 |
| | | SS 5 | | 420 | –3 |
| | | SS 5 | | 840 | 9 |
| | | SS 5 | | 1680 | 12 |
| | | | 1 | 267 | 6 |
| | | | 1 | 533 | 0 |
| | | | 1 | 1067 | –12 |
| | | | 2 | 428 | 3 |
| | | | 4 | 310 | 0 |
| A | 50 | – | | – | 30 |
| | | SS 5 | | 420 | 9 |
| | | SS 5 | | 840 | 12 |
| | | SS 5 | | 1680 | 18 |
| | | | 1 | 267 | –3 |
| | | | 2 | 857 | –3 |
| B | 90 | – | | – | 27 |
| | | SS 5 | | 420 | 0 |
| | | | 3 | 310 | 0 |
| | | | 4 | 310 | 0 |
| C | 90 | SS 5 | | 420 | 3 |
| | | | 1 | 267 | 3 |

As shown in Table II additives 1 to 4 are largely superior to SS 5. The Table also shows the optimum level obtainable with SS 5: further increasing the additive concentration results in an increase of the pourpoint.

## Claims

1. Mineral oil composition comprising from 0.01 to 0.5%wt of an additive obtainable by copolymerizing a mixture of at least two alpha-olefins with at least 16 carbon atoms each in the presence of a catalyst comprising a) a tetravalent titanium compound on a magnesium dihalide support and an alkyl ester of an aromatic carboxylic acid and b) a trialkyl aluminium compound.

2. Composition as claimed in claim 1, wherein the major constituent in the mixture of alpha-olefins has 20, 22 or 24 carbon atoms.

3. Composition as claimed in claim 1 or 2, wherein the mixture also comprises alpha-olefins with at least 30 carbon atoms, each of the latter in an amount not exceeding 7 %wt, calculated on the weight of the mixture.

4. Composition as claimed in claim 1, wherein the mixture comprises alpha-olefins with at least 18 carbon atoms.

5. Composition as claimed in any one of claims 1 to 4, wherein each and every of the alpha-olefins in the mixture has an even number of carbon atoms.

6. Composition as claimed in any one of claims 1 to 5, in which the titanium compound in the catalyst is titanium tetrachloride, and the alkyl ester is a $C_1$ to $C_4$ alkyl ester of benzoic acid.

## Patentansprüche

1. Mineralölzusammensetzung, umfassend 0,01 bis 0,5 Gewichtsprozent eines Additivs, das durch Copolymerisation einer Mischung von mindestens 2 alpha-Olefinen mit jeweils mindestens 16 Kohlenstoffatomen in Gegenwart eines Katalysators, der a) eine vierwertige Titanverbindung auf einem Magnesiumdihalogenidträger und einen Alkylester einer aromatischen Carbonsäure, und b) eine Trialkylaluminiumverbindung enthält, erhältlich ist.

2. Zusammensetzung wie in Anspruch 1 beansprucht, in welcher der Hauptbestandteil in der Mischung von alpha-Olefinen 20,22 oder 24 Kohlenstoffatome aufweist.

3. Zusammensetzung wie in Anspruch 1 oder 2 beansprucht, in welcher die Mischung auch alpha-Olefine mit mindestens 30 Kohlenstoffatomen umfaßt, die letzteren jeweils in einer Menge von nicht mehr als 7 Gewichtsprozent, bezogen auf das Gewicht der Mischung.

4. Zusammensetzung wie in Anspruch 1 beansprucht, in welcher die Mischung alpha-Olefine mit mindestens 18 Kohlenstoffatomen umfaßt.

5. Zusammensetzung wie in irgendeinem der Ansprüche 1 bis 4 beansprucht, in welcher ausnahmslos jedes der alpha-Olefine in der Mischung eine gerade Zahl von Kohlenstoffatomen enthält.

6. Zusammensetzung wie in irgendeinem der Ansprüche 1 bis 5 beansprucht, in welcher die Titanverbindung im Katalysator Titantetrachlorid ist, und der Alkylester ein $C_1$-$C_4$-Alkylester der Benzoesäure ist.

## Revendications

1. Composition d'huile minérale comprenant de 0,01 à 0,5% en poids d'un additif obtenable par copolymérisation d'un mélange d'au moins deux alpha-oléfines ayant au moins 16 atomes de carbone chacune en présence d'un catalyseur comprenant a) un composé du titane tétravalent sur un support de dihalogénure de magnésium et un ester alkylique d'un acide carboxylique aromatique et b) un composé trialkyle aluminique.

2. Composition selon la revendication 1, dans laquelle le constituant principal dans le mélange d'alpha-oléfines possède 20, 22 ou 24 atomes de carbone.

3. Composition selon la revendication 1 ou 2, dans laquelle le mélange comprend également des alpha-oléfines avec au moins 30 atomes de carbone, chacune des dernières en une quantité ne dépassant pas 7% en poids, calculé sur le poids du mélange.

4. Composition selon la revendication 1, dans laquelle le mélange comprend des alpha-oléfines avec au moins 18 atomes de carbone.

5. Composition selon l'une quelconque des revendications 1 à 4, dans laquelle toutes et chacune des alpha-oléfines dans le mélange ont un nombre pair d'atomes de carbone.

6. Composition selon l'une quelconque des revendications 1 à 5, dans laquelle le composé du titane dans le catalyseur est du tétrachlorure de titane, et l'ester alkylique est un ester alkylique en $C_1$ à $C_4$ de l'acide benzoïque.